Europäisches Patentamt

**European Patent Office**

**Office européen des brevets**

(11) Veröffentlichungsnummer: **0 092 067**
**A1**

(12) **EUROPÄISCHE PATENTANMELDUNG**

(21) Anmeldenummer: **83102981.4**

(22) Anmeldetag: **25.03.83**

(51) Int. Cl.³: **H 02 K 11/00**

(30) Priorität: **01.04.82 DE 3212087**

(43) Veröffentlichungstag der Anmeldung: **26.10.83**
**Patentblatt 83/43**

(84) Benannte Vertragsstaaten: **DE FR GB**

(71) Anmelder: **ROBERT BOSCH GMBH, Postfach 50,
D-7000 Stuttgart 1 (DE)**

(72) Erfinder: **Schädlich, Fritz, Dipl.-Ing., Panoramastrasse 4,
D-7022 Leinfelden-Echterdingen (DE)**

(54) Vorrichtung zum Kontaktieren eines Polpakets.

(57) Es wird eine Vorrichtung zum Kontaktieren eines Polpakets eines insbesondere zum Antrieb eines Elektrowerkzeuges dienenden Universalmotors vorgeschlagen, die
eine automatisierte Montage ermöglicht. Durch eine sich in
das Polpaket (1) hinein erweiternde Ausnehmung (2) und
ein in diese Ausnehmung (2) passendes, federndes Anschlußstück (3, 5) wird ein maschinelles Verbinden des
Anschlußstücks (3) für ein Kabel (4) zum Y-Anschluß eines
Kondensators bzw. des Steckfusses (5) eines Halbleiterbauelements (6) mit dem Polpaket (1) möglich.

EP 0 092 067 A1

ACTORUM AG

R. 17724

18.3.1982 Br/Le

ROBERT BOSCH GMBH, 7000 STUTTGART 1

Vorrichtung zum Kontaktieren
eines Polpakets

Stand der Technik

Die Erfindung betrifft eine Vorrichtung zum Kontaktieren eines
Polpakets nach der Gattung des Hauptanspruchs. Eine solche Vorrichtung besteht bisher darin, daß Polpaket senkrecht zu
seinen einzelnen Blechlamellen zu durchbohren und in dieser
Bohrung mittels einer eingeschobenen Wellennadel einen Kontakt
herzustellen. Ein solches Vorgehen erfordert manuelle Montagetätigkeit und ist hinderlich für die weitere Automatisierung
bei der Herstellung von Motoren mit einem derartigen Polpaket.
Andererseits kann auf diese Art der Kontaktierung nicht verzichtet werden, weil dieses Polpaket aus Gründen der Funkentstörung mit einem sogenannten "Y-Anschluß" eines Kondensators
verbunden werden muß. Außer für diese Funkentstörung kann
ein derartiger Anschluß aber auch noch für andere Zwecke, z.B.
zum Messen eines Ableitstromes, vorteilhaft sein. Durch die
DE-OS 24 53 416 ist es bereits bekannt geworden, einen Teil
der Bleche eines Blechpakets mit Vorsprüngen zu versehen, an

...

denen ein Kondensator mittels Spannelementen befestigt werden
kann. Auch diese Art von Haltemitteln ist nicht geeignet für
ein automatisiertes Kontaktieren des Polpakets weil zum Festlegen eines Anschlußelementes auf diese Weise mehrere, verschieden gerichtete Montagebewegungen notwendig sind.
Ein Kontaktieren des Polpakets kann aber gemäß DE-GM 79 19 276
auch vorteilhaft sein um dieses Polpaket als Kühlkörper für
ein Halbleiterbauelement zu nutzen. Die Schraubverbindung
zwischen dem Halbleiterbauelement und dem Polpaket ist aber
eben so wenig geeignet für einen automatisierten Montagevorgang.

Vorteile der Erfindung

Die erfindungsgemäße Vorrichtung mit den kennzeichnenden Merkmalen des Hauptanspruchs hat demgegenüber den Vorteil, das
maschinelle Verbinden eines Anschlußstücks mit dem Polpaket
mittels einer einzigen Einschubbewegung zu ermöglichen. Die
sich in das Polpaket hinein erweiternde Ausnehmung und das hierzu passende, federnde Anschlußstück ermöglichen eine sichere
und leicht herstellbare Schiebe- oder Schnappverbindung.
Durch die in den Unteransprüchen aufgeführten Maßnahmen sind
vorteilhafte Weiterbildungen und Verbesserungen der im Hauptanspruch angegebenen Vorrichtung möglich. Besonders vorteilhaft ist das Ausbilden der Ausnehmung als Schwalbenschwanzführung. Das hierzu passende, federnde Anschlußstück kann
ein Anschlußkontakt für den "Y-Anschluß" eines Funkentstörkondensators oder ein Fuß eines Kondensators oder eines Halbleiterbauelementes sein.

...

Zeichnung

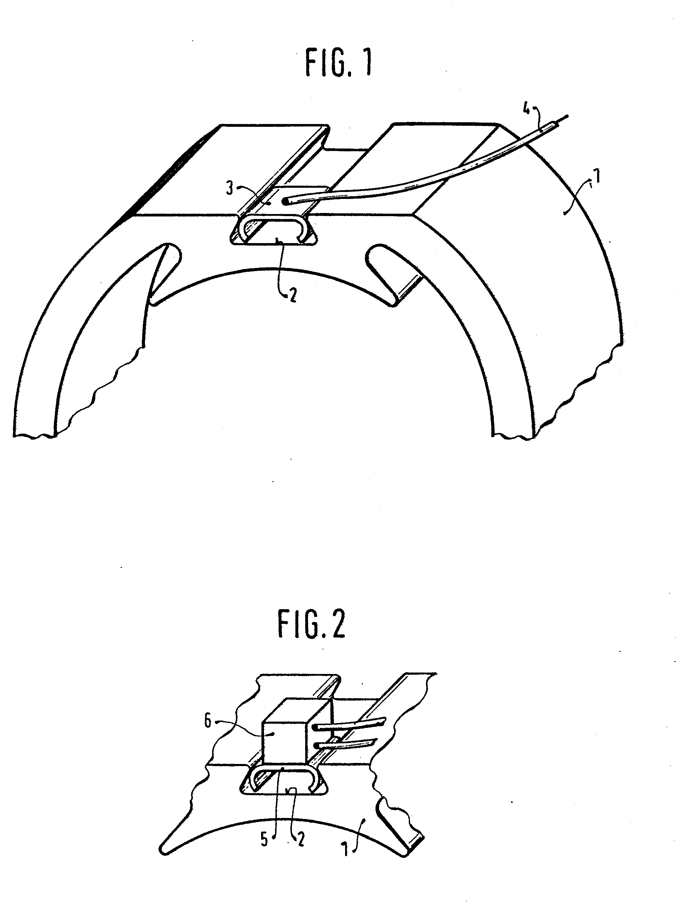

Zwei Ausführungsbeispiele des Erfindungsgegenstandes sind in
der Zeichnung dargestellt und in der nachfolgenden Beschreibung
näher erläutert. Es zeigen Figur 1 eine perspektivische Teildarstellung eines Polpakets mit einem, lediglich dem elektrischen
Kontakt dienenden Anschlußstück und Figur 2 eine perspektivische
Teildarstellung eines Polpakets, an dem ein Halbleiterbauelement
mittels eines als Steckfuß ausgebildeten Anschlußstücks befestigt ist.

Beschreibung der Ausführungsbeispiele

Ein lamelliertes Polpaket 1 ist mit einer Schwalbenschwanzführung 2 versehen. Im Ausführungsbeispiel nach Figur 1
ist in diese Schalbenschwanzführung ein Anschlußstück 3
eingesetzt, daß über ein Kabel 4 mit dem Y-Anschluß eines
nicht dargestellten Kondensators elektrisch verbunden ist.

Im Ausführungsbeispiel gemäß Figur 2 ist in die Schwalbenschwanzführung 2 ein Steckfuß 5 eines Halbleiterbauelements 6
eingesetzt. Dieser Steckfuß 5 dient hier als Anschlußstück
zum Verbinden des Halbleiterbauelements 6 mit dem Polpaket 1,
mit gutem Wärmekontakt. Das Halbleiterbauelement 6, beispielsweise ein Triac oder ein Thyristor, ist somit mit einem direkten
Wärmeübergang zum großvolumigen Maschinenständer versehen. Besonders im Falle hoher Belastung des Halbleiterbauelements wird
damit dessen Kühlung begünstigt.

R.

18.3.1982 Br/Le

ROBERT BOSCH GMBH, 7000 STUTTGART 1

Ansprüche

1. Vorrichtung zum Kontaktieren eines Polpakets eines insbesondere zum Antrieb eines Elektrowerkzeuges dienenden
Universalmotors, gekennzeichnet durch eine sich in das Polpaket (1) hinein erweiternde Ausnehmung (2) und ein in diese
Ausnehmung (2) passendes, federndes Anschlußstück (3, 5).

2. Vorrichtung nach Anspruch 1, dadurch gekennzeichnet, daß
die Ausnehmung (2) schwalbenschwanzförmig ausgebildet ist.

3. Vorrichtung nach einem der Ansprüche 1 und 2, dadurch gekennzeichnet, daß sie dem Y-Anschluß eines Funkentstörkondensators als Verbindungsmittel dient.

4. Vorrichtung nach einem der Ansprüche 1 und 2, dadurch gekennzeichnet, daß sie als Verbindungsmittel für eine Meßeinrichtung dient.

5. Vorrichtung nach einem der Ansprüche 1 und 2, dadurch gekennzeichnet, daß das Anschlußstück ein Steckfuß eines Kondensatorgehäuses ist.

. . .

6. Vorrichtung nach einem der Ansprüche 1 und 2, dadurch gekennzeichnet, daß das Anschlußstück ein Steckfuß (5) eines Halbleiterbauelements (6) ist.

FIG. 1

FIG. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | US-A-3 867 658 (R.W. DOCHTERMAN) * Ansprüche 4, 5; Spalte 13, Zeile 24 - Spalte 14, Zeile 18; Figuren 8, 9 * | 1,2,4 | H 02 K 11/00 |
| A | US-A-3 875 439 (M.E. ROACH) * Spalte 3, Zeilen 36-66; Spalte 6, Zeilen 3-31; Figuren 2, 8, 9 * | 1,2,4 | |
| D,A | DE-A-2 453 416 (LICENTIA PATENT-VERWALTUNGS-GMBH) | | |

RECHERCHIERTE SACHGEBIETE (Int. Cl. ³)

H 02 K 11/00

Der vorliegende Recherchenbericht wurde für alle Patentansprüche erstellt.

| Recherchenort BERLIN | Abschlußdatum der Recherche 05-07-1983 | Prüfer FAORO G |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82